Europäisches Patentamt

European Patent Office

Office européen des brevets

(19)

(11) Veröffentlichungsnummer : **0 086 341**
**B1**

(12) **EUROPÄISCHE PATENTSCHRIFT**

(45) Veröffentlichungstag der Patentschrift :
28.08.85

(21) Anmeldenummer : **83100359.5**

(22) Anmeldetag : **17.01.83**

(51) Int. Cl.⁴ : **G 01 N 29/00, G 21 C 17/00**

(54) Sonde zur zerstörungsfreien Prüfung von zylindrischen Hohlräumen, insbesondere von Dampferzeugerrohren.

(30) Priorität : 29.01.82 DE 3202931
29.01.82 DE 3202877
29.01.82 DEU 8202241
29.01.82 DE 3202977
29.01.82 DEU 8202128

(43) Veröffentlichungstag der Anmeldung :
24.08.83 Patentblatt 83/34

(45) Bekanntmachung des Hinweises auf die Patenterteilung : 28.08.85 Patentblatt 85/35

(84) Benannte Vertragsstaaten :
CH FR GB LI NL SE

(56) Entgegenhaltungen :
DE-A- 2 040 329
DE-B- 2 636 107
US-A- 3 810 384
US-A- 4 096 757
Patent Abstracts of Japan, Band 5, Nr. 100, 27. Juni 1981
Patent Abstracts of Japan, Band 4, Nr. 134, 19. September 1980, Seite 58P28

(73) Patentinhaber : KRAFTWERK UNION AKTIENGE-SELLSCHAFT
Wiesenstrasse 35
D-4330 Mülheim (Ruhr) (DE)

(72) Erfinder : Müller, Thomas, Dipl.-Ing.
Am Europakanal 45
D-8520 Erlangen (DE)
Erfinder : Gugel, Georg
Fürther Strasse 17
D-8501 Kalchreuth (DE)
Erfinder : Lehner, Günter
Stettiner Strasse 18
D-8520 Erlangen (DE)

(74) Vertreter : Mehl, Ernst, Dipl.-Ing. et al
Postfach 22 01 76
D-8000 München 22 (DE)

**Beschreibung**

Die Erfindung betrifft eine Sonde zur zerstörungsfreien Prüfung von zylindrischen Hohlräumen, insbesondere von Dampferzeugerrohren, mit einem rotierenden Prüfkopf, der in einem eine zylindrische Außenfläche aufweisenden Gehäuse gelagert ist und von einem in diesem Gehäuse angeordneten Motor angetrieben wird. Eine devartige Sonde ist aus der US-A-4 096 757 bekannt. Diese Konstruktion soll im Hinblick auf die Herstellung verbessert werden, weil es wegen der durch die Dampferzeugerrohre begrenzten Raumverhältnisse darauf ankommt, den Motor zwar gut festzulegen, aber auch möglichst zugänglich anzuordnen, so daß er leicht zu montieren und zu reparieren ist. Die Erfindung geht weiter von der Aufgabe aus, die Brauchbarkeit und Zuverlässigkeit der Sonde zu verbessern. Dabei liegt das Problem vor, daß das Drehmoment des Motors wegen der kleinen Motorabmessungen sehr klein ist, weil der Motor nicht größer sein kann als die zu prüfenden Rohre, die in der Regel nicht mehr als 2 cm Durchmesser haben.

Die erfindungsgemäße Lösung besteht darin, daß das Gehäuse aus einem Schalenkörper, der im Bereich des Motors als Halbzylinder ausgeführt ist, und aus einem den Schalenkörper umgebenden Rohr gebildet ist und daß zwischen dem Schalenkörper und dem Motor mindestens an einer Stelle eine Passung zur definierten Festlegung des motors beteht. Hierbei sorgt der Schalenköper für die genaue Festlegung, obwohl der Motor im wesentlichen zugänglich ist, weil lediglich das den Schalenkörper umgebende Rohr den Zugang versperrt. Andererseits ist die Abstützung sehr raumsparend, weil der Schalenkörper die für das Sondengehäuse erforderliche Festigkeit liefert und das Rohr damit dünnwandig sein kann.

Die Passung kann vorteilhaft zwischen einer zentrischen Bohrung in einem quer zur Zylinderachse verlaufenden Steg und einem die Motorwelle umgebenden Stutzen des Motorgehäuses gegeben sein. Der Stutzen kann dabei ein Gewinde zum Einshjauben in den Schalenkörper aufweisen, so daß zusätzlich zu der räumlichen Fixierung in einfacher Weise die Motorbefestigung gewährleistet ist.

Bei einer vorteilhaften Ausführungsform der Erfindung ist vorgesehen, daß im Bereich der Passung die Antriebswelle des Prüfkopfes gelagert ist, die mit der Motorwelle über eine Steckverbindung gekuppelt ist. Damit gelingt es, den Motor mit einer einzigen Befestigungsstelle auszubilden, nach deren Lösung ein Motorausbau möglich ist. Zugleich kann der Prüfkopf unmittelbar nach der dem Motor abgekehrten Seite aus der Steckverbindung gelöst werden, ohne daß der Motor gesondert abgebaut werden muß. Dies ermöglicht einen schnellen Austausch defekter Prüfköpfe.

Der Schalenkörper kann an der dem Prüfkopf abgekehrten Stirnseite vorteilhaft mit einem Stecker abge schlossen sein, der Anschlußleitungen für den Motor und den Prüfkopf führt. Damit wird die Festigkeit des Schalenkörpers zur Bildung eines dichten Raumes ausgenutzt, in dem der Motor geschützt untergebracht ist. Ferner kann der Schalenkörper noch einen Bereich zur Aufnahme von Kontaktkörpern aufweisen, die Schleifringen an der zum Prüfkopf führenden Antriebswelle zugeordnet sind. Damit sind die elektrischen Komponenten, die besonders empfindlich sind, geschützt in einen gemeinsamen Raum zusammmengefaßt. Außerdem ist die Handhabung dadurch verbessert, daß die Sonde auf Grund der Steckverbindung leicht auswechselbar ist. Deshalb können Sonden mit Abnutzungserscheinungen oder Störungen leicht ausgetauscht werden. Gleichzeitig wird die wasserdichte Steckverbindung zur einseitigen Abdichtung des Motors benutzt, so daß keine zusätzlichen Elemente benötigt werden und eine leichte und damit auch leicht zu bewegende Anordnung entsteht. Die andere Dichtung liegt auf der « Außenseite» des den Motor enthaltenden Raumes und kommt, wie gefunden wurde, mit kleinen Reibungskräften aus. Deshalb steht das geringe Motordrehmoment praktisch voll zur Bewegung des Prüfkopfes zur Verfügung und wird nicht durch die von der Dichtung benötigten Kräfte weitgehend aufgezehrt.

Die Schleifringe können auch als eine einfache und dennoch möglichst genau arbeitende Einrichtung zur Erfassung der Winkellage dienen. Dazu besteht ein mit dem Prüfkopf starr und direkt verbundener Rotor aus zwei Teilen unterschiedlicher elektrischer Leitfähigkeit, von denen der eine in Form eines schmalen Streifens längs des Rotorumfanges verläuft. Dem Rotor sind zwei Bürsten zugeordnet, die einen der Leitfähigkeit des Streifens entsprechend unterschiedlichen Strom über den Rotor führen. Damit erhält man ein elektrisches Signal in einer durch den Streifen gegebenen Winkellage des Rotors, so daß die gewünschte Lokalisierung von Fehlern ohne weiteres möglich ist. Verwendet man mehrere Streifen mit signifikant verschiedenen Signalen, zum Beispiel Streifen mit verschiedenen Bürsten, so kann man die Genauigkeit der Feststellung der Winkellage noch beliebig erhöhen.

Auf die dem Prüfkopf zugekehrte Seite des Schalenkörpers kann eine Haube aufgeschraubt werden, die ein Wälzlager für den Prüfkopf umfaßt. Die gleiche Haube kann auf der Außenseite das Widerlager für eine V-Ring-Dichtung bilden, mit der das Innere des Schalenkörpers abgedichtet wird. Die V-Ring-Dichtung stützt sich vorteilhaft gegen den Prüfkopf ab, so daß sie in einem Spalt geschützt untergebracht ist.

Zur Prüfung von Dampferzeugerrohren kann an dem zylindrischen Gehäuse eine elastische Ringdichtung vorgesehen werden. Diese Dichtung muß hohen Anforderungen genügen, weil die Rohre infolge von Unebenheiten oder Verkrustungen oder auch von der Fabrikation her unterschiedliche Innendurchmesser haben können. Zugleich sind nur geringe Kräfte an der Dichtung zulässig, damit der Vorschub für die Sonde nicht behindert wird. Deshalb ist gemäß einer Weiterbildung der Erfindung vorgesehen, daß die Ringdichtung zwei ebene Gummischeiben umfaßt, die zwischen metallischen Spannringen festgeklemmt sind, und daß die Gummischeiben unterschiedliche Außendurchmesser aufweisen. Eine solche Ringdichtung hat sich in der praktischen Erprobung ausgezeichnet bewährt.

Der Unterschied der Durchmesser ist etwa so groß wie die Dicke der Gummischeiben. Diese wiederum sollte 1/15 bis 1/30 des Durchmessers betragen, der auf die zu prüfenden Rohre ausgerichtet ist. Bei Rohren mit beispielsweise 20 mm Durchmesser bedeutet dies, daß die Dicke der Gummischeiben im Bereich von 1 mm liegt. In der gleichen Größenordnung liegt dann auch der Durchmesserunterschied.

Für die Festlegung der Gummischeiben, die auch für die Abdichtung wichtig ist, können die Spannkörper an der den Gummischeiben zugekehrten Fläche aufgerauht sein, zum Beispiel durch eine Riffelung.

In dem um die Achse rotierenden Prüfkopf kann ein radial zur Achse wirkender Ultraschallschwinger angeordnet sein. Der Ultraschallschwinger wird zwar über ein Koppelmedium, zum Beispiel Wasser, mit der zu prüfenden Wandung verbunden. Dennoch wäre es günstig, den Schwinger solcher Ultraschallsonden besser an die zu prüfenden Hohlräume anpassen zu können. Zu diesem Zweck ist der Schwinger gemäß einer anderen Weiterbildung der Erfindung in einer radial verlaufenden Bohrung verstellbar geführt und mit einer Klemmschraube festgelegt. Damit kann er mit geringem Aufwand verstellt und mithin justiert oder nachjustiert werden. Zum Beispiel können so große Fertigungstoleranzen der zu prüfenden Rohre ausgeglichen werden, damit stets eine große Empfindlichkeit der Ultraschallsonde gegeben ist.

Eine besonders günstige Ausführungsform besteht darin, daß die Klemmschraube eine Madenschraube ist, die kürzer als die Länge der zugehörigen Gewindebohrung ist, und daß die die Madenschraube enthaltende Gewindebohrung mit einer weiteren Schraube verschlossen ist, die kürzer als die Differenz der Längen von Gewindebohrung und Madenschraube ist. Hierbei wird die Gewindebohrung zusätzlich als Konstruktionselement genutzt, denn sie kann, wie das Ausführungsbeispeil später näher zeigt, einen die Vorderseite der sonde bildenden zugespitzten Stopfen tragen.

Zur Abdichtung des Schwingers kann man so vorgehen, daß die radial verlaufende Bohrung auf der einen Seite mit einer schalenförmigen Metallplatte verschlossen ist, deren Krümmung der Prüfkopfoberfläche angepaßt ist. Ferner ist es günstig, wenn in diesev Bohrung eine Nut mit einem Rundschnurring zur Abdichtung des Schwingers vorgesehen ist. Damit gelingt es, den für die Verschiebung des Schwingers gewünschten Raum flüssigkeitsfrei zu halten, so daß darin die für den Anschluß des Schwingers erforderlichen elektrischen Leitungen nicht besonders isoliert werden müssen.

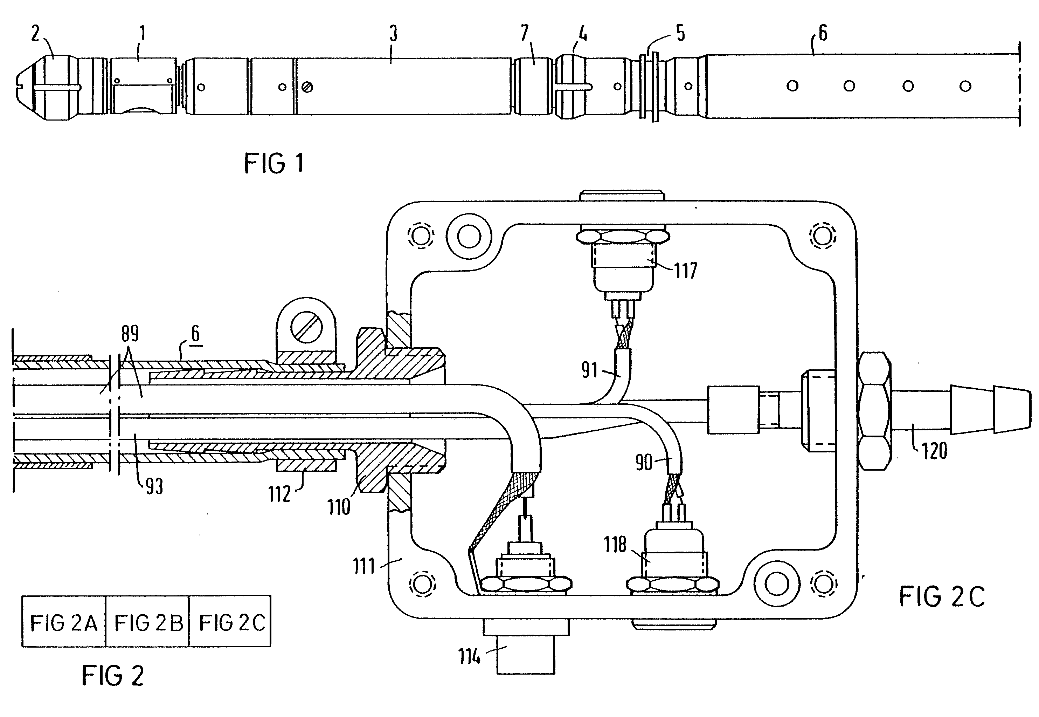

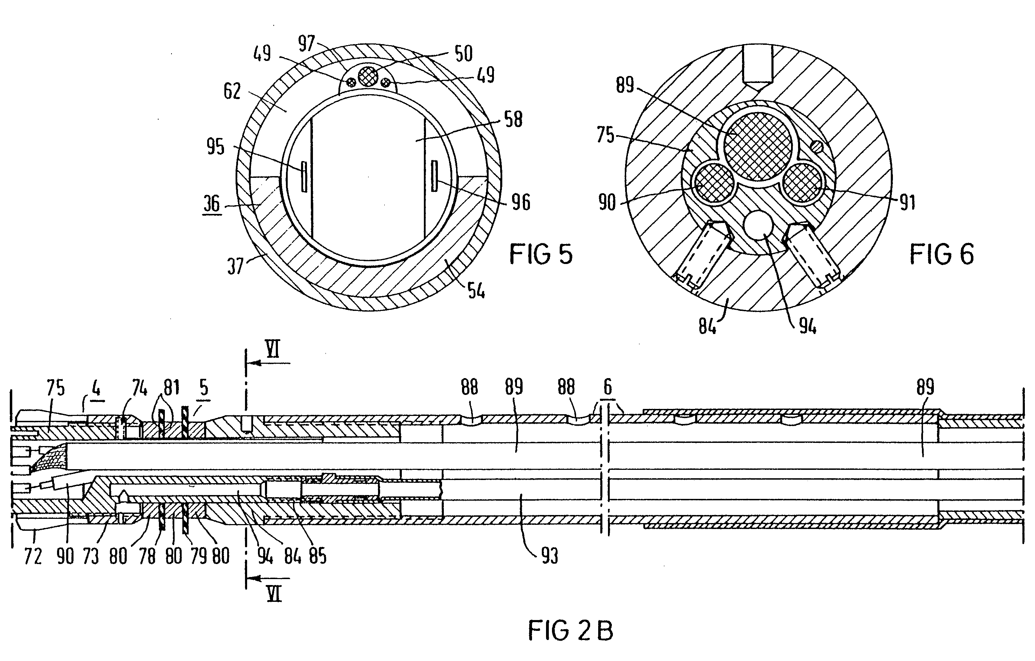

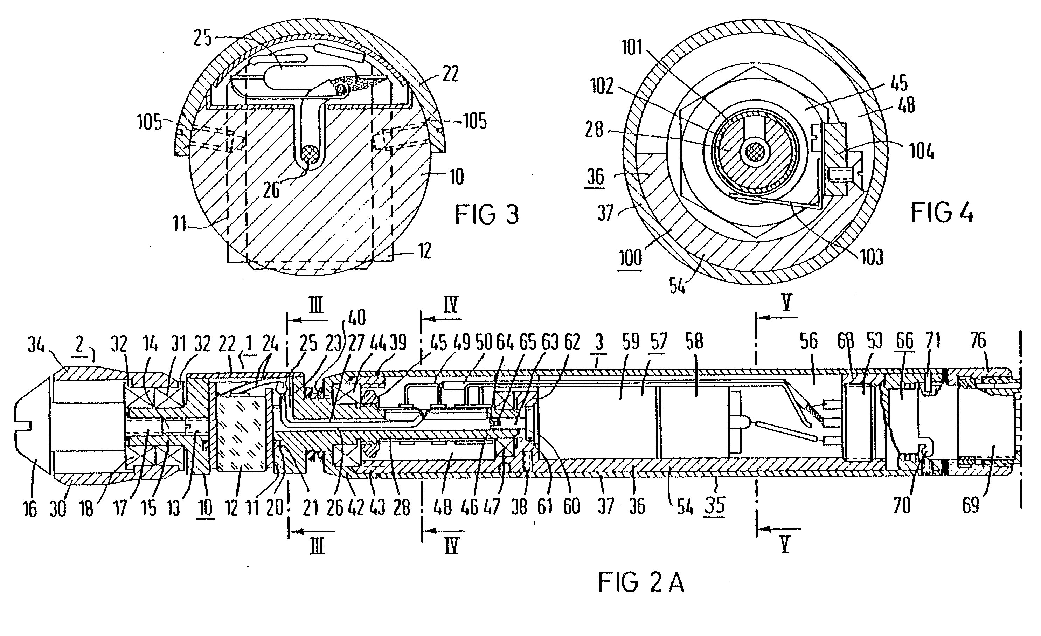

Zur näheren Erläuterung der Erfindung wird anhand der beiliegenden Zeichnung ein Ausführungsbeispiel beschrieben. Dabei zeigt die Fig. 1 die Sonde als Ganzes in einer Seitenansicht. Die Fig. 2 zeigt einen Längsschnitt in größerem Maßstab, während die Fig. 3, 4, 5 und 6 Querschnitte an den aus Fig. 2 ersichtlichen Stellen darstellen.

Die Ultraschallsonde besitzt als wesentlichen Teil den drehbaren Prüfkopf 1, der in einer Führungsspitze 2 und einem zylindrischen Mittelteil 3 drehbar gelagert ist. An das Mittelteil 3 schließt sich ein weiteres Führungsteil 4 mit einem Abdichtungskörper 5 an, an dem ein Schubschlauch 6 befestigt ist. Zwischen dem Führungsteil 4 und dem Mittelteil 3 ist eine Steckverbindung 7 mit einem Bajonettverschluß vorgesehen.

Der Prüfkopf 1 umfaßt einen Haltekörper 10, der in einer radial, d. h. quer zur Längsachse der Sonde verlaufenden Bohrung 11 den Ultraschallschwinger 12 enthält. Der Ultraschallschwinger ist in der Bohrung 11 in radialer Richtung verschiebbar gelagert und mit einer Madenschraube 13 festgeklemmt.

Die Madenschraube 13 sitzt in einer Gewindebohrung 14, die durch einen Wellenzapfen 15 verläuft, auf dem die Führungsspitze 2 gelagert ist. Wie man sieht, ist die Madenschraube 13 wesentlich kürzer als die Länge der Gewindebohrung 14. In das freie Ende ist ein konisch zugespitztes Endstück 16 mit tels eines Zapfens 17 eingeschraubt, mit dem ein Wälzlager 18 auf dem Wellenzapfen 15 festgelegt ist. Außerdem wird mit dem Endstück 16 die Gewindebohrung 14 verschlossen, so daß die Klemmung des Schwingers 12 mit der Madenschraube 13 gesichert ist.

Wie man sieht, ist die Bohrung 11 des Prüfkopfes 1 am einen Ende mit einer Nut 20 versehen, in der ein Rundschnurring 21 für eine Abdichtung sorgt. Das andere Ende der Bohrung 11 ist mit einer gekrümmten Metallplatte 22 dicht verschlossen, die auch einen Hohlraum 23 zur Aufnahme der elektrischen Anschlußleitungen 24 des Schwingers 12 und eines Abgleichwiderstandes 25 abdeckt. In den Hohlraum 23 führt ein Kabel 26, das durch eine zentrische Bohrung 27 einer Antriebswelle 28 verläuft, mit der der Prüfkopf 1 im Mittelteil 3 gelagert und mit einem als Ganzes mit 57 bezeichneten Antrieb verbunden ist. In Fig. 3 ist zu sehen, daß die Platte 22 der zylindrischen Form des Haltekörpers 10 angepaßt ist, an dem sie mit Schrauben 105 befestigt ist.

Die Führungsspitze 2 umfaßt einen geschlitzten Mantel 30, der von dem Wälzlager 18 und von einem zweiten Wälzlager 31 mit flanschen 32 gehalten wird. Der geschlitzte Mantel 30 bildet mit radial vorspringenden Fingern 34 Lamellen zur Führung der Sonde an der zu prüfenden Rohrwand.

Das Mittelteil 3 hat als wesentlichen Bestandteil des Sondengehäuses 35 einen Schalenkörper 36, der von einem zylindrischen Rohr 37 umschlossen und mit diesem über eine Schraube 38 verbunden ist. Das dem Prüfkopf 1 zugekehrte Ende des Schalenköpers 36 ist mit einer Haube 42 verschlossen, die auf ein Gewinde 43 des Schalenkörpers 36 aufgeschraubt ist, wobei eine Dichtung 39 zwischen der Haube 42 und dem Rohr 37 versprannt wird. Zwischen der Haube 42 und der Antriebswelle 28 sitzt ein Wälzlager 44, das mit einer Ringmutter 45 auf der Antriebswelle festgelegt ist. Ferner ist zwischen der Haube 42 und dem Haltekörper 10 des Prüfkopfes 1 eine V-Ring-Dichtung 40 verspannt.

Das dem Prüfkopf 1 abgekehrte Ende 46 der Antriebswelle 28 sitzt in einem zweiten Wälzlager 47, das im Schalenkörper 36 festgelegt ist. Im Raum 48 zwischen der Ringmutter 45 und dem Wälzlager 47 sind verschiedene Schleifkontakte angeordnet, mit denen die über das Kabel 26 übertragenen elektrischen Werte des Schwingers 12 auf feststehende Anschlußleitungen übertragen werden, die in den Figuren 2A und 5 als Kabel 49 und 50 zu sehen sind und zu einem Stecker 53 an dem dem Prüfkopf 1 abgekehrten Ende des Schalenkörpers 36 führen.

Der Schalenkörper 36 bildet mit einem halbzylindrischen Teil 54 einen von dem Rohr 36 oben abgeschlossenen Raum 56, in dem als Antrieb 57 für den Prüfkopf 1 eine Kombination aus einem Elektromotor 58 und einem Untersetzungsgetriebe 59 angeordnet ist. Das mit dem Motor 58 zusammengebaute Getriebe ist mit einem Gewindestutzen 60 in eine zentrische Bohrung 61 in einem Steg 62 des Schalenkörpers 36 eingeschraubt, so daß eine paßgenaue Festlegung des Antriebes 57 gegeben ist.

Im Bereich des Steges 62 ist die einen Schlitz 64 aufweisende Getriebewelle 63 über einen Bolzen 65 geführt, der durch die Bohrung 27 der Antriebswelle 28 ragt. Dadurch entsteht eine lösbare Steckkupplung als mechanische Verbindung zwischen dem Elektromotor 58 und dem zu drehenden Prüfkopf 1.

Der Stecker 53 ist in ein hohlzylindrisches Ende 68 des Schalenkörpers 36 eingeschraubt und abgedichtet, zum Beispiel dadurch, daß der Raum 56 mit Kunstharz ausgegossen wird. Der Stecker 53 gehört zu einem Bajonettverschluß 66, von dem ein abgewinkelter Schlitz 70 zu sehen ist, in den Bolzen 71 eingreifen können. Dadurch entsteht eine leicht lösbare elektrische und mechanische Steckverbindung zwischen dem Mittelteil 3 und dem Führungsteil 4.

Ähnlich wie die Führungsspitze 2 besitzt das Führungsteil 4 eine nach außen vorspringende Erweiterung 72, die in Längsrichtung der sonde geschlitzt ist, so daß Lamellen entstehen. Die Erweiterung gehört zu einem Rohrstück 73, das auf einen Innenkörper 75 aufgeschraubt und dort mit einer Schraube 74 gesichert ist. Der Innenkörper 75 umschließt die in Fig. 6 dargestellten und später näher beschriebenen Leitungen, die zu dem dem Führungsteil 4 zugeordneten Stecker 69 führen. Dieser gehört zum Bajonettverschluß 66 und ist mit einer Haube 76 nach Art einer Überwurfmutter festgelegt.

Auf dem Innenkörper 75 ist die als Ganzes mit 5 bezeichnete Dichtung angeordnet. Sie umfaßt zwei ebene Gummischeiben 78 und 79, die bei einer Dicke von 0,8 mm zwei unterschiedliche Außendurchmesser, nämlich 20 mm für die Scheibe 78 und 21 mm für die Scheibe 79, besitzen. Die beiden Gummischeiben 78, 79 sind mit Hilfe von drei gleichen, ringförmigen Spannringen 80 festgelegt, die an den den Gummischeiben 78, 79 zugekehrten Stirnflächen 81 eine durch eine Riffelung aufgerauhte Oberfläche aufweisen. Die Spannringe 80 und die Gummischeiben 78, 79 werden dadurch gegeneinander gepreßt, daß ein rohrförmiger Anschlußkörper 84 auf einen Absatz 85 des Innenkörpers 75 aufgespannt wird.

Auf dem Anschlußkörper 84 sitzt der Schubschlauch 6. Dies ist ein Kunststoffschlauch mit einem Außendurchmesser von 18 mm und einer Wandstärke von 1,5 mm. Der Schlauch besteht zum Beispiel aus Polyäthylen. Er besitzt eine längs einer Mantellinie verlaufende Perforierung mit kreisförmigen Löchern 88, die einen Durchmesser von 3 mm haben und mit einer Teilung T von 18 mm längs einer Mantellinie des zylindrischen Schlauches 6 angeordnet sind.

Der Schubschlauch 6 umgibt, wie die Fig. 6 zeigt, ein Koaxialkabel 89 für die Übertragung der Meßwerte der Ultraschallsonde. Ein Kabel 90 dient der Spannungsversorgung des Motors 58, der vorzugsweise mit Gleichstrom betrieben wird. Ein weiteres Kabel 91 überträgt Impulse, die für die Drehzahl und Winkelstellung des Prüfkopfes 1 charakteristisch sind. Außerdem ist im Schubschlauch 6 noch ein Schlauch 93 untergebracht, der mit einer Bohrung 94 im Innenkörper 75 in Verbindung steht. Dadurch kann zur Ankopplung des Schwingers 12 dienende Flüssigkeit, vorzugsweise Wasser, in den durch die Scheiben 78 und 79 einerseits abgeschlossenen Raum geführt werden.

Die Fig. 5 zeigt die Anschlußklemmen 95 und 96 des Elektromotors 58, der von dem halbzylindrischen Teil 54 des Schalenkörpers 36 umfaßt wird, sowie die durch eine Ausnehmung in dem Steg 62 verlaufenden Kabel 49 und 50.

Die Kabel 49 dienen der Übertragung von Impulsen, die mit Hilfe eines mehrteiligen Schleifringes 100 erzeugt werden. Der Schleifring ist mit dem Prüfkopf 1 über die Antriebswelle 28 unmittelbar gekoppelt. Er umfaßt bei der ausführungsform nach Fig. 4 eine metallische Hülse 101, die von de Antribswelle 28 durch eine Isolierstoffhülse 102 elektrisch getrennt ist. Auf der metallischen Hülse 101 gleitet ein fedrjnder Kontaktbügel 103, der mit einer ortsfesten Klemmstelle 104 befestigt ist.

Zur Erzeugung von Impulsen kann die metallische Hülse 101 längs einer Mantellinie durch Isolierstoffstreifen unterbrochen werden, die den elektrischen Kontakt zwischen dem Schleifer 103 und der Hülse 101 je nach der Winkelstellung der Hülse 101 aufheben. Die Impulse sind ein Maß für die Drehzahl des Prüfkopfes 1 und für dessen Winkellage. Andererseits kann mit der in Fig. 4 dargestelten geschlossenen Hülse 101 eine Übertragung der Ultraschallmeßwerte vorgenommen werden, so daß mit dem Kabel 50 eine Verlängerung des Kabels 26 über die Schleifringe gegeben ist.

Das Ende des Schubschlauches 6 ist an einem Koppelstück 110 eines Anschlußkastens 111 mit einer Schelle 112 festgeklemmt. In dem Anschlußkasten 111 ist eine Durchführung 114 für das Koaxialkabel 89 angebracht, das die Meßwerte des Ultraschallkopfes 1 führt. Zwei weitere Durchführungen 117 und 118 sind für die Anschlußleitungen 90 und 91 vorgesehen, die den Motorstrom bzw. die die Drehzahl und Winkellage kennzeichnenden Impulswerte übertragen. Zum Anschluß des Schlauches 93 für die Ankopplungsflüssigkeit ist eine Schlauchverbindung 120 in dem Kasten 111 angeordnet.

**Patentansprüche**

1. Sonde zur zerstörungsfreien Prüfung von zylindrischen Hohlräumen, insbesondere von Dampferzeugerrohren, mit einem rotierenden Prüfkopf (1), der in einem eine zylindrische Außenfläche aufweisenden Gehäuse (35) gelagert ist und von einem in diesem Gehäuse (35) angeordneten Motor (58) angetrieben wird, dadurch gekennzeichnet, daß das Gehäuse (35) aus einem Schalenkörper (36), der im Bereich des Motors (58) als Halbzylinder (54) ausgeführt ist, und aus einem den Schalenkörpern (36) umgebenden Rohr (37) gebildet ist und daß zwischen dem Schalenkörper (36) und dem Motor (58) mindestens an einer Stelle eine Passung (61) zur definierten Festlegung des Motors (58) besteht.

2. Sonde nach Anspruch 1, dadurch gekennzeichnet, daß die Passung zwischen einer zentrischen Bohrung (61) in einem quer zur Zylinderachse verlaufenden Steg (62) und einem die Motorwelle umgebenden Stutzen (60) des Motorgehäuses gegeben ist.

3. Sonde nach Anspruch 2, dadurch gekennzeichnet, daß der Stutzen (60) ein Gewinde zum Einschrauben in den Schalenkörper (36) aufweist.

4. Sonde nach Anspruch 1, 2 oder 3, dadurch gekennzeichnet, daß im Bereich der Passung die Antriebswelle (28) des Prüfkopfes (1) gelagert ist, die mit der Motorwelle (63) über eine Steckverbindung (64, 65) gekuppelt ist.

5. Sonde nach einem der Ansprüche 1 bis 4, dadurch gekennzeichnet, daß der Schalenkörper (36) an der dem Prüfkopf (1) abgekehrten Stirnseite mit einem Stecker (53) abgeschlossen ist, der Anschlußleitungen für den Motor (58) und den Prüfkopf (1) führt.

6. Sonde nach einem der Ansprüche 1 bis 5, dadurch gekennzeichnet, daß der Schalenkörper (36) an dem dem Prüfkopf (1) zugekehrten Ende Kontaktkörper (103) für Schleifringe (100) enthält, die auf der zum Prüfkopf (1) führenden Antriebswelle (28) sitzen.

7. Sonde nach einem der Ansprüche 1 bis 6, dadurch gekennzeichnet, daß auf die dem Prüfkopf (1) zugekehrte Stirnseite des Schalenkörpers (36) eine Haube (42) aufgeschraubt ist, die ein Wälzlager (44) für den Prüfkopf (1) umfaßt.

8. Sonde nach Anspruch 7, dadurch gekennzeichnet, daß auf der Außenseite der Haube (42) eine V-Ring-Dichtung (40) angeordnet ist, die das Innere (56) des Schalenkörpers (36) abdichtet und sich gegen den Prüfkopf (1) abstützt.

9. Sonde nach einem der Ansprüche 1 bis 8, dadurch gekennzeichnet, daß an dem dem Prüfkopf (1) abgekehrten Ende des Schalenkörpers (36) eine elastische Ringdichtung aus zwei ebenen Gummischeiben (78, 79) angeordnet ist, die zwischen metallischen Spannringen (80) festgeklemmt sind und unterschiedliche Außendurchmesser aufweisen.

10. Sonde nach einem der Ansprüche 1 bis 9, dadurch gekennzeichnet, daß der Prüfkopf (1) eine radial verlaufende Bohrung (11) aufweist, in der ein Ultraschall-Schwinger (12) verstellbar geführt und mit einer Klemmschraube (13) festgelegt ist.

11. Sonde nach Anspruch 10, dadurch gekennzeichnet, daß die Bohrung (11) auf der einen Seite mit einer schalenförmigen Metallplatte (22) verschlossen ist und daß der Schwinger (12) auf der anderen Seite mit einem Rundschnurring (21) abgedichtet ist.

**Claims**

1. A probe for the non-destructive testing of cylindrical hollow bodies, in particular of steam-generating tubes, comprising a rotating test head (1) which is mounted in a housing (35) having a cylindrical outer surface, and which is driven by a motor (58) arranged in the housing (35), characterised in that the housing (35) consists of a shell body (36), which in the region of the motor (58) is formed as a semicylinder (54), and a pipe (37) which surrounds the shell body (36); and that between the shell body (36) and the motor (58), at least at one point, there is a fitting (61) for the definite fixing of the motor (58).

2. A probe as claimed in Claim 1, characterised in that the fitting is provided between a central bore (61) in a cross-piece (62), which runstransversely to the axis of the cylinder, and a connecting piece (60) of the motor housing which surrounds the motor shaft.

3. A probe as claimed in Claim 2, characterised in that the connecting piece (60) has a thread for screwing into the shell body (36).

4. A probe as claimed in Claim 1, 2 or 3, characterised in that the drive shaft (28) of the test head (1), which is coupled to the motor shaft (63) by means of a plug connection (64, 65), is arranged in the region of the fitting.

5. A probe as claimed in one of Claims 1 to 4, characterised in that, at its end facing away from the test head (1), the shell body (36) is closed by means of a plug (53) which has connecting leads for the motor (58) and the test head (1).

6. A probe as claimed in one of Claims 1 to 5, characterised in that at its end facing the test head (1), the shell body (36) includes contact bodies (103) for sliding rings (100) which fit onto the drive shaft (28) leading to the test head (1).

7. A probe as claimed in one of Claims 1 to 6, characterised in that a cap (42) which encloses a roller bearing (44) for the test head (1) is screwed onto the end of the shell body (36) which faces the test head (1).

8. A probe as claimed in Claim 7, characterised in that on the outside of the cap (42), there is arranged a V-ring seal (40) which seals the interior (56) of the shell body (36) and is supported on the test head (1).

9. A probe as claimed in one of Claims 1 to 8, characterised in that at the end of the shell body (36) which faces away from the test head (1), there is arranged an elastic ring seal which consists of two flat rubber gaskets (78, 79) clamped between metal clamping rings (80) and which have different outer diameters.

10. A probe as claimed in one of Claims 1 to 9, characterised in that the test head (1) has a radially extending bore (11), in which an ultrasonic oscillator (12) is adjustably guided and fixed by means of a clamping screw (13).

11. A probe as claimed in Claim 10, characterised in that the bore (11) is closed by means of a dished metal plate (22) on the one side and that the oscillator (12) is sealed on the other side by means of a round cord ring (21)

## Revendications

1. Sonde pour l'inspection non destructive de cavités cylindriques, notamment de tubes de générateurs de vapeur, comprenant une tête d'inspection (1) tournante, qui est montée dans un boîtier (35) présentant une surface extérieure cylindrique et qui est entraînée par un moteur (58) disposé dans ce boîtier (35), caractérisée en ce que le boîtier (35) est formé d'une coquille (36) agencée en hémi-cylindre (54) dans la région du moteur (58) et d'un tube (37) entourant la coquille (36) et en ce que, entre la coquille (36) et le moteur (58) est prévu, pour la localisation du moteur (58) d'une manière définie, au moins en un endroit un moyen d'ajustement (61).

2. Sonde suivant la revendication 1, caractérisée en ce que le moyen d'ajustement est prévu entre un perçage (61) centré ménagé dans une traverse (62) s'étendant transversalement à l'axe du cylindre et une tubulure (60) du carter du moteur qui entoure l'arbre du moteur.

3. Sonde suivant la revendication 2, caractérisée en ce que la tubulure (60) présente un filetage pour le vissage dans la coquille (36).

4. Sonde suivant la revendication 1, 2 ou 3, caractérisée en ce que l'arbre d'entraînement (28) de la tête d'inspection (1), qui est accouplé à l'arbre du moteur (63) par une liaison par enfichage (64, 65) est monté dans la région du moyen d'ajustement.

5. Sonde suivant l'une des revendications 1 à 4, caractérisée en ce que la coquille (36) est fermée du côté frontal éloigné de la tête d'inspection (1) par un connecteur (53) qui guide les conducteurs de raccordement pour le moteur (58) et pour la tête d'inspection (1).

6. Sonde suivant l'une des revendications 1 à 5, caractérisée en ce que la coquille (36) contient, sur l'extrémité tournée vers la tête d'inspection (1), des corps de contact (103) pour des bagues collectrices (100) qui sont calées sur l'arbre d'entraînement (28) menant à la tête d'inspection (1).

7. Sonde suivant l'une des revendications 1 à 6, caractérisée en ce que, sur le côté frontal de la coquille (37), qui est tourné vers la tête d'inspection (1), est vissée un capot (42) qui comporte un palier à roulement (44) pour la tête d'inspection (1).

8. Sonde suivant la revendication 7, caractérisée en ce que, sur le côté extérieur du capot (42) est disposée une garniture d'étanchéité (40) annulaire en V, qui rend étanche l'intérieur (56) de la coquille (36) et s'appuie sur la tête d'inspection (1).

9. Sonde suivant l'une des revendications 1 à 8, caractérisée en ce que sur l'extrémité de la coquille (36), qui est éloignée de la tête d'inspection (1), est disposée une garniture d'étanchéité annulaire élastique, constituée de deux rondelles (78, 79) en caoutchouc, qui sont bloquées entre deux bagues (80) métalliques de blocage et qui présentent des diamètres extérieurs différents.

10. Sonde suivant l'une des revendications 1 à 9, caractérisée en ce que la tête d'inspection (1) présente un perçage (11) s'étendant radialement, dans lequel un émetteur d'ultrasons (12) est guidé de manière règlable et peut être fixé par une vis de blocage (13).

11. Sonde suivant la revendication 10, caractérisée en ce que le perçage (11) est fermé sur l'un des côtés par une plaque métallique (22) en forme de coquille, et en ce que l'émetteur (12) est rendu étanche de l'autre côté par une bague annulaire (21) de serrage.

FIG 1

FIG 2C

FIG 2A | FIG 2B | FIG 2C

FIG 2

0 086 341

FIG 5

FIG 6

FIG 2 B

0 086 341

FIG 3

FIG 4

FIG 2 A

0 086 341